# EUROPÄISCHE PATENTSCHRIFT

(11) **EP 2 225 065 B1**
(45) Veröffentlichungstag und Bekanntmachung des Hinweises auf die Patenterteilung: **18.04.2012**
(21) Anmeldenummer: 08864220.2
(22) Anmeldetag: 18.12.2008
(51) Int. Cl.: B23H 3/00, B23H 9/10, B23K 20/02, F01D 5/30, B23P 15/00

(54) **VERFAHREN ZUR HERSTELLUNG UND REPARATUR EINES BAUTEILS**
METHOD FOR PRODUCING AND REPAIRING A PART
PROCÉDÉ DE PRODUCTION ET DE RÉPARATION D'UN COMPOSANT

(30) Priorität: 22.12.2007 DE 102007062559
(43) Veröffentlichungstag der Anmeldung: 08.09.2010
(73) Patentinhaber: MTU Aero Engines GmbH, 80995 München (DE)
(72) Erfinder: BAYER, Erwin, 85221 Dachau (DE); BURGER, Matija, 81379 München (DE); BUSSMANN, Martin, 85247 Schwabhausen (DE); GINDORF, Alexander, 85247 Schwabhausen (DE); PLATZ, Albin, 86510 Ried-Baindlkirch (DE)
(86) Internationale Anmeldenummer: PCT/DE2008/002133
(87) Internationale Veröffentlichungsnummer: WO 2009/080013

(56) Entgegenhaltungen:
- WO-A-2007/095902
- DE-A1- 19 858 702
- US-A- 4 883 216

## Beschreibung

Die vorliegende Erfindung betrifft ein Verfahren zur Herstellung und Reparatur eines Bauteils bestehend aus mindestens zwei miteinander gefügten metallischen Bauelementen, insbesondere Bauelementen einer Gasturbine, mit den Merkmalen des Oberbegriffs des Anspruchs 1, wobei das Fügen und Verbinden entsprechender Verbindungsflächen der Bauelemente mittels eines Pressschweißverfahrens erfolgt und bei dem Fügeprozess ein Aufmaß im Bereich einer Fügezone der beiden Verbindungsflächen angestaucht wird.

Ein derartiges Verfahren ist aus der WO2007/095902A1 bekannt.

Schlanke dreidimensionale Geometrien von metallischen Bauteilen, wie zum Beispiel Bliskschaufeln, werden in der Regel aus einem Vollmaterial herausgearbeitet. Allerdings können hierbei keine Materialkombinationen verwendet werden. Materialschonender und vielseitiger in der Anwendung können diese Geometrien mittels eines Fügeprozesses hergestellt werden. Dabei sind aus dem Stand der Technik verschiedene Verfahren zum Verbinden von metallischen Bauelementen mittels induktivem Hochfrequenzpressschweißens bekannt. So beschreibt zum Beispiel die DE 198 58 702 A1 ein Verfahren zum Verbinden von Schaufelteilen einer Gasturbine, wobei ein Schaufelblattabschnitt und wenigstens ein weiteres Schaufelteil bereitgestellt werden. Dabei werden entsprechende Verbindungsflächen dieser Elemente im Wesentlichen fluchtend beabstandet zueinander positioniert und anschließend durch Erregen eines Induktors mit hochfrequentem Strom und durch Zusammenfahren unter Berührung ihrer erwärmten Verbindungsflächen miteinander verschweißt. Der Induktor wird mit einer konstanten Frequenz, die im Allgemeinen über 0,75 MHz liegt, erregt. Die Frequenz wird zudem in Abhängigkeit von der Geometrie der Verbindungsflächen gewählt. Weitere induktive Hochfrequenzpressschweißverfahren sind aus der EP 1112141 B1 und der EP 1140417 B1 bekannt. Des Weiteren ist ein Fügen von Bauelementen mittels linearen Reibschweißverfahren bekannt. Bei dünnwandigen Bauteilen, wie zum Beispiel dünnwandigen Schaufelblättern, ist dieses Verfahren aber nicht mehr anwendbar, da die vorhandene Abstandsgeometrie die Einleitung der Reibkraft behindert. Das gefügte Bauteil weist üblicherweise ein Aufmaß auf, das zur Erlangung einer gewünschten Endkontur noch bearbeitet werden muss. So muss bei Bliskschaufeln entsprechend der Verwendung von einer im Blattbereich bereits eine Endkontur aufweisenden Schaufel oder bei Verwendung einer Schaufel mit Aufmaß jeweils die Fügezone oder das gesamte Schaufelblatt bearbeitet werden. Bei steifen Blättern kann dies zum Beispiel durch einen adaptiven Fräsprozess erreicht werden. Bei dünnen Bauteilstrukturen kann es jedoch aufgrund der auftretenden Fräskräfte zu einer Beschädigung und insbesondere zu einer Verbiegung der Struktur, wie zum Beispiel einer Schaufelgeometrie kommen.

Es ist daher Aufgabe der vorliegenden Erfindung ein gattungsgemäßes Verfahren zur Herstellung und Reparatur eines Bauteils bestehen aus mindestens zwei miteinander gefügten metallischen Bauelementen, insbesondere Bauelementen einer Gasturbine bereitzustellen, bei dem eine materialschonende und sichere Verbindung der Bauelemente sowie eine materialschonende Endbearbeitung des gefügten Bauteils gewährleistet ist.

Gelöst werden diese Aufgaben durch ein Verfahren gemäß den Merkmalen des Anspruchs 1.

Vorteilhafte Ausgestaltungen der Erfindung sind in den jeweiligen Unteransprüchen beschrieben.

Ein erfindungsgemäßes Verfahren zur Herstellung und Reparatur eines Bauteils bestehend aus mindestens zwei miteinander gefügten metallischen Bauelementen, insbesondere Bauelementen einer Gasturbine, umfasst das Fügen und Verbinden entsprechender Verbindungsflächen der Bauelemente mittels eines Pressschweißverfahrens. Bei dem Fügeprozess wird dabei ein Aufmaß im Bereich einer Fügezone der beiden Verbindungsflächen angestaucht. In einem weiteren Verfahrensschritt wird nach dem Fügen der beiden Bauelemente eine Bearbeitung des Aufmaßes mittels eines präzisen elektrochemischen Abtragens (PECM) bis zum Erreichen einer vordefinierten Endkontur des Bauteils durchgeführt. Durch die Verbindung eines Pressschweißverfahrens mit einem elektrochemischen Abtragverfahren, nämlich dem präzisen elektrochemischen Abtragen, ist einerseits eine sichere und materialschonende Verbindung der zu fügenden Bauelemente und andererseits eine materialschonende Endbearbeitung des gefügten Bauteils gewährleistet. Dies trifft insbesondere auf schlanke dreidimensionale Geometrien aufweisende Bauteile, wie zum Beispiel dünnwandige Schaufelblätter von Gasturbinen zu. Diese können ohne die Gefahr eines Verbiegens der Geometrie, insbesondere der Schaufelgeometrie, auf die entsprechende Endkontur gebracht werden. Durch die Verwendung des Pressschweißverfahrens können zudem unterschiedliche metallische Materialkombinationen für die einzelnen, miteinander zu fügenden metallischen Bauelemente verwendet werden. So können zum Beispiel die Schaufeln und die Rotorscheibe einer so genannten Blisk einer Gasturbine unterschiedliche Materialzusammensetzungen aufweisen. Des Weiteren ist das erfindungsgemäße Verfahren auch zum Reparatur von Bauteilen geeignet. So bewirkt der durch das Pressschweißverfahren erzeugte Aufmaßbereich ein Egalisieren der Außenkontur auch im Reparaturfall, wobei der angestauchte Aufinaßbereich anschließend durch das präzise elektrochemische Abtragen auf eine vordefinierte Endkontur des reparierten Bauteils gebracht wird.

In einer vorteilhaften Ausgestaltung des erfindungsgemäßen Verfahrens ist das Pressschweißverfahren ein induktives Nieder- oder Hochfrequenzpressschweißverfahren, wobei die verwendeten Frequenzen aus einem Bereich zwischen 0,05 - 2,5 MHz gewählt werden.

In weiteren vorteilhaften Ausgestaltungen des erfindungsgemäßen Verfahrens erfolgt das präzise elektrochemische Abtragen mittels eines synchronen, auf allen Seiten des Bauteils gleichzeitig abtragenden Absenkprozesses. Dabei kann das Abtragen mittels einer Hohlelektrode durchgeführt werden. Es ist aber auch möglich, dass das Abtragen mittels mindestens jeweils einer an gegenüberliegenden Seiten des Bauteils geführten Elektroden durchgeführt wird. Durch den synchronen Absenkprozess wird eine mögliche Beschädigung, insbesondere ein mögliches Verbiegen der zu bearbeitenden Bereiche des Bauteils zuverlässig verhindert.

In einer weiteren vorteilhaften Ausgestaltung des erfindungsgemäßen Verfahrens erfolgt beim präzisen elektrochemischen Abtragen eine gezielte Elektrolytführung entlang des Bauteils, derart, dass in nicht zu bearbeitenden Bereichen des Bauteils kein Materialabtrag erfolgt. Dabei können zur Elektrolytführung an den Elektroden und/oder dem Bauteil elektrisch nicht leitende Führungselemente angeordnet sein. Diese können bei Bedarf auch elastische Eigenschaften aufweisen. Durch die gezielte Elektrolytführung erfolgt vorteilhafterweise kein unzulässiger Ätzangriff an bereits eine Endkontur aufweisenden Bereichen des zu bearbeitenden Bauteils.

In einer weiteren vorteilhaften Ausgestaltung des erfindungsgemäßen Verfahrens wird beim präzisen elektrochemischen Abtragen eine Passivierung der nicht zu bearbeitenden Bereiche des Bauteils durchgeführt. Dies kann zum Beispiel durch ein Einstellen einer geeigneten elektrochemischen Potentialdifferenz zwischen Bauteil und Elektrode erfolgen. Es ist aber auch möglich, dass die Passivierung durch ein Aufbringen von elektrisch isolierenden Werkstoffen auf die Bauteiloberfläche erfolgt. Auch durch die Passivierung der nicht zu bearbeitenden Bereiche des Bauteils, insbesondere die bereits die Endkontur aufweisenden Bereiche des Bauteils werden diese gegenüber einem ungewünschten Ätzangriff geschützt. Dabei kann die Passivierung der bereits in die Endkontur aufweisenden Bereiche des Bauteils mit der gezielten Elektrolytführung, wie es im Vorhergehenden beschrieben ist, kombiniert werden.

In einer weiteren vorteilhaften Ausgestaltung des erfindungsgemäßen Verfahrens ist die Kontur jeder Elektrode an die Endkontur des Bauteils angepasst. Dadurch ist es möglich, dass der Bearbeitungsschritt des beidseitigen und gleichzeitigen Absenkens sehr schnell und präzise durchgeführt werden kann.

In einer weiteren vorteilhaften Ausgestaltung des erfindungsgemäßen Verfahrens führen die Elektroden beim Absenken oszillierende Bewegungen durch. In Kombination mit dem gepulsten PECM-Verfahren lassen sich sehr hohe Oberflächenqualitäten erzielen, da zwischen den Pulspausen der Elektrodenspalt vollständig mit frischen, unverbrauchten Elektrolyt ausgespült werden kann. Mögliche Gasblasen und Elektrodenschlamm werden aus dem Elektrodenspalt zuverlässig abgeführt. Bei oszillierenden Elektroden wird dabei nur im Bereich des geringsten Abstandes zwischen der Elektrode und dem zu bearbeitenden Bauteil ein Strompuls abgegeben. Im Bereich des maximalen Abstandes zwischen Elektrode und zu bearbeitendem Werkstück erfolgt dann die Elektrolytspülung.

In einer weiteren vorteilhaften Ausgestaltung des erfindungsgemäßen Verfahrens ist das erste Bauelement eine Schaufel oder ein Teil einer Schaufel eines Rotors in einer Gasturbine und das zweite Bauelement ein Ring oder einer Scheibe des Rotors oder ein am Umfang des Rings oder der Scheibe angeordneter Schaufelfuß. Dies betrifft insbesondere integral mit einer Rotorscheibe oder einem tragenden Ring hergestellte Rotorschaufeln (BLISK oder BLING). Es ist aber auch möglich, dass die Bauelemente Teile einer Schaufel eines Rotors in einer Gasturbine sind.

Das erfindungsgemäße Verfahren ermöglicht eine materialschonende Herstellung und Reparatur von Blisks und Blings, insbesondere mit mittleren und kleinen Schaufelblättern. Vorteilhafterweise sind Materialkombinationen, d. h. die Verwendung unterschiedlicher metallischer Materialien für Schaufel und Scheibe beziehungsweise Schaufel und Ring möglich. Durch den Fügeprozess wird ein Aufmaßbereich erzeugt, der zu einem Egalisieren der Außenkontur auch im Falle der Reparatur des entsprechenden Bauteils führt. Durch eine gezielte Elektrolytführung und/oder Passivierung der Endkonturbereiche der Blisk oder Bling werden zudem diese Bereiche von einem unzulässigen Materialabtrag beziehungsweise Ätzangriff geschützt. Schließlich wird verhindert, dass große einseitige Biegekräfte auf die Schaufel wirken, da zum Beispiel ein beidseitiges synchrones und kraftarmes Abtragen über den präzisen elektrochemischen Abtragprozess erfolgt. Dabei ist die Endkontur auch bei geringen und/oder unterschiedlichen Aufmaßen in einem hohen Qualitätsbereich erreichbar.

## Patentansprüche

1. Verfahren zur Herstellung und Reparatur eines Bauteils bestehend aus mindestens zwei miteinander gefügten metallischen Bauelementen, insbesondere Bauelementen einer Gasturbine, wobei das Fügen und Verbinden entsprechender Verbindungsflächen der Bauelemente mittels eines Prsssschweißverfahrens erfolgt und bei dem Fügeprozess ein Aufmaß im Bereich einer Fügezone der beiden Verbindungsflächen angestaucht wird und wobei nach dem Fügen der beiden Bauelemente eine Bearbeitung des Aufmaßes mittels eines präzisen elektrochemischen Abtragens (PECM) bis zum Erreichen einer vordefinierten Endkontur des Bauteils erfolgt, **dadurch gekennzeichnet, dass** beim präzisen elektrochemischen Abtragen eine Passivierung der nicht zu bearbeitenden Bereiche des Bauteils durchgeführt wird, wobei die Passivierung durch Einstellen einer geeigneten elektrochemischen Potentialdifferenz zwischen Bauteil und Elektrode erfolgt, und dass beim präzisen elektrochemischen Abtragen eine gezielte Elektrolytführung entlang des Bauteils erfolgt, wobei in den passivierten nicht zu bearbeitenden Bereichen des Bauteils kein Materialabtrag erfolgt.

2. Verfahren nach Anspruch 1, **dadurch gekennzeichnet, dass** das Pressschweißverfabren ein induktives Nieder- oder Hochfrequenzpressschweißverfahren ist und die verwendeten Frequenzen aus einem Bereich zwischen 0,05 - 2,5 MHz gewählt werden.

3. Verfahren nach Anspruch 1 oder 2, **dadurch gekennzeichnet, dass** das präzise elektrochemische Abtragen mittels eines synchronen, auf allen Seiten des Bauteils gleichzeitig abtragenden Absenkprozess erfolgt.

4. Verfahren nach Anspruch 3, **dadurch gekennzeichnet, dass** das Abtragen mittels mindestens jeweils einer an gegenüberliegenden Seiten des Bauteils geführten Elektroden durchgeführt wird.

5. Verfahren nach einem der Ansprüche 1 bis 4, **dadurch gekennzeichnet, dass** zur Elektrolytführung an den Elektroden und/oder dem Bauteil elektrisch nicht-leitende Führungselemente angeordnet sind.

6. Verfahren nach Anspruch 5, **dadurch gekennzeichnet, dass** die Führungselemente elastisch ausgebildet sind.

7. Verfahren nach einem der Ansprüche 1 bis 6, **dadurch gekennzeichnet, dass** eine zusätzliche Passivierung durch ein Aufbringen von elektrisch isolierenden Werkstoffen auf die Bauteiloberfläche erfolgt.

8. Verfahren nach einem der vorhergehenden Ansprüche, **dadurch gekennzeichnet, dass** beim präzisen elektrochemischen Abtragen die Elektroden beim Absenken oszillierende Bewegungen durchführen.

9. Verfahren nach einem der vorhergehenden Ansprüche, **dadurch gekennzeichnet, dass** das erste Bauelement eine Schaufel oder ein Teil einer Schaufel eines Rotors in einer Gasturbine ist und das zweite Bauelement ein Ring oder eine Scheibe des Rotors oder ein am Umfang des Rings oder der Scheibe angeordneter Schaufelfuß ist.

## Claims

1. Method for producing and repairing a part consisting of at least two metallic components that are joined together, in particular components of a gas turbine, wherein the joining and connection of corresponding connecting surfaces of the components is effected by means of a pressure-welding method, and in the joining process an overmeasure in the region of a joining zone of the two connecting surfaces is upset, and wherein after the joining of the two components processing of the overmeasure is effected by means of precise electrochemical machining (PECM) until a predefined final contour of the part is attained, **characterised in that** in the precise electrochemical machining passivation of the regions of the part that are not to be processed is carried out, wherein the passivation is effected by adjusting a suitable electrochemical potential difference between the part and the electrode, and **in that** in the precise electrochemical machining controlled electrolyte-guidance is effected along the part, with no machining of material being effected in the passivated regions of the part that are not to be processed.

2. Method according to claim 1, **characterised in that** the pressure-welding method is an inductive low- or highfrequency pressure-welding method, and the frequencies used are selected from a range between 0.05 - 2.5 MHz.

3. Method according to claim 1 or 2, **characterised in that** the precise electrochemical machining is effected by means of a synchronous sink-down process simultaneously machining on all sides of the part.

4. Method according to claim 3, **characterised in that** the machining is carried out by means of at least, in each case, one electrode guided on opposing sides of the part.

5. Method according to one of claims 1 to 4, **characterised in that** for the electrolyte-guidance electrically nonconducting guide elements are arranged on the electrodes and/or the part.

6. Method according to claim 5, **characterised in that** the guide elements are formed elastically.

7. Method according to one of claims 1 to 6, **characterised in that** additional passivation is effected by applying electrically insulating materials to the surface of the part.

8. Method according to one of the preceding claims, **characterised in that** during the precise electrochemical machining the electrodes carry out oscillating movements when sinking down.

9. Method according to one of the preceding claims, **characterised in that** the first component is a blade or a portion of a blade of a rotor in a gas turbine, and the second component is a ring or a disk of the rotor or a blade base that is arranged on the circumference of the ring or of the disk.

## Revendications

1. Procédé de production et de réparation d'un composant constitué d'au moins deux éléments de construction métalliques assemblés l'un à l'autre, en particulier d'éléments de construction d'une turbine à gaz, l'assemblage et la liaison des surfaces de liaison correspondantes des éléments de construction s'effectuant au moyen d'un procédé de soudure à la presse et, au cours du processus d'assemblage, une surépaisseur dans la région d'une zone d'assemblage des deux surfaces de liaison étant refoulée et, après l'assemblage des deux éléments de construction, un usinage de la surélévation s'effectuant au moyen d'un enlèvement électrochimique précis (PECM) jusqu'à l'obtention d'un contour final prédéfini du composant, **caractérisé en ce que** lors de l'enlèvement électrochimique précis, une passivation des zones à ne pas usiner du composant est exécutée, la passivation s'effectuant par réglage d'une différence de potentiel électrochimique appropriée entre le composant et l'électrode, et **en ce que** lors de l'enlèvement électrochimique précis, un guidage ciblé de l'électrolyte s'effectue le long du composant, aucun enlèvement de matériau ne s'effectuant dans les zones passivées à ne pas usiner du composant.

2. Procédé selon la revendication 1, **caractérisé en ce que** le procédé de soudure à la presse est un procédé de soudure à la presse inductif à basse ou à haute fréquence et les fréquences utilisées sont sélectionnées dans une plage comprise entre 0,05 et 2,5 MHz.

3. Procédé selon la revendication 1 ou 2, **caractérisé en ce que** l'enlèvement électrochimique précis s'effectue au moyen d'un processus d'abaissement synchrone effectuant un enlèvement simultané sur tous les côtés du composant.

4. Procédé selon la revendication 3, **caractérisé en ce que** l'enlèvement est exécuté au moyen d'au moins une électrode guidée respectivement sur les côtés opposés du composant.

5. Procédé selon l'une des revendications 1 à 4, **caractérisé en ce que** pour le guidage de l'électrolyte, des éléments de guidage non électroconducteurs sont disposés sur les électrodes et/ou le composant.

6. Procédé selon la revendication 5, **caractérisé en ce que** les éléments de guidage sont élastiques.

7. Procédé selon l'une des revendications 1 à 6, **caractérisé en ce qu'**une passivation supplémentaire s'effectue par l'application de matériaux électriquement isolants sur la surface du composant.

8. Procédé selon l'une des revendications précédentes, **caractérisé en ce que** lors de l'enlèvement électrochimique précis, les électrodes effectuent des déplacements oscillants lors de l'abaissement.

9. Procédé selon l'une des revendications précédentes, **caractérisé en ce que** le premier élément de construction est une aube ou une partie d'une aube d'un rotor dans une turbine à gaz et le second élément de construction est une bague ou un disque du rotor ou une emplanture d'aube disposée sur la périphérie de la bague ou du disque.
